# EUROPEAN PATENT APPLICATION

(11) **EP 3 913 151 A1**
(43) Date of publication of application: **24.11.2021**
(21) Application number: 21175100.3
(22) Date of filing: 20.05.2021
(51) Int. Cl.: E03C 1/02, E03C 1/04, F16K 11/14, F16K 11/16, F16K 31/385

(54) **SLIDE SWITCH MECHANICAL SHOWER DEVICE**

(30) Priority: 21.05.2020 CN 202010436769
(71) Applicant: Xiamen Solex High-tech Industries Co., Ltd., 361000 Fujian (CN)
(72) Inventor: LIN, Fangqi, Xiamen, 361000 (CN); HU, Lihong, Xiamen, 361000 (CN); CHEN, Wenxing, Xiamen, 361000 (CN)
(74) Representative: Verscht, Thomas Kurt Albert

(57) **Abstract**

The present disclosure discloses a slide switch mechanical shower device, which comprises a first normally closed water outflow valve core, a second normally closed water outflow valve core and a toggle button assembly; the toggle button assembly comprises a toggle button disposed on a surface of the shower device, and the toggle button is configured to be toggled along a length of the shower device; when no interaction force is generated between the toggle button is in a middle position, the toggle button assembly and the first normally closed water outflow valve core and the second normally closed water outflow valve core, the first normally closed water outflow valve core and the second normally closed water outflow valve core are in normally closed states at the same time; when the toggle button moves leftward or rightward relative to the middle position, the interaction force generated between the toggle button assembly and one of the first normally closed water outflow valve core or the second normally closed water outflow valve core to drive the first normally closed water outflow valve core or the second normally closed water outflow valve core to be opened. Its switching operation is light and convenient, switching directivity and visual intuition is better, and a cost of a pure machine cost is relatively low.

## Description

### FIELD OF THE DISCLOSURE

The present disclosure relates to sanitary wares, in particular relates to a shower device.

### BACKGROUND OF THE DISCLOSURE

A shower device is a device used to control a combined shower head. It has functions for switching water outlet terminals, opening and stopping water and temperature adjustment. This kind of shower device has evolved from a single handle to an operation box along with increase of shower functions, and its operation convenience and intuitiveness have been greatly improved. However, this kind of operation box often requires a large number of electronic components to achieve switching, temperature adjustment, etc., a cost is relatively high, waterproof requirements are also relatively high, which causes the cost of this kind of shower box to remain high, is usually only assembled to high-end products and cannot be used by more people.

### BRIEF SUMMARY OF THE DISCLOSURE

The present disclosure provides a slide switch mechanical shower device, its switching operation is light and convenient, switching directivity and visual intuition is better, and a cost of a pure machine cost is relatively low.

In order to solve the technical problems, the present disclosure discloses a slide switch mechanical shower device, which comprises a first normally closed water outflow valve core, a second normally closed water outflow valve core and a toggle button assembly; the toggle button assembly comprises a toggle button disposed on a surface of the shower device, and the toggle button is configured to be toggled along a length of the shower device;

When the toggle button is in a middle position, no interaction force is generated between the toggle button assembly and the first normally closed water outflow valve core and the second normally closed water outflow valve core, the first normally closed water outflow valve core and the second normally closed water outflow valve core are in normally closed states at the same time; when the toggle button moves leftward or rightward relative to the middle position, the interaction force generated between the toggle button assembly and one of the first normally closed water outflow valve core or the second normally closed water outflow valve core to drive the first normally closed water outflow valve core or the second normally closed water outflow valve core to be opened.

In a preferred embodiment, the toggle button assembly further comprises a lift rod; a middle position of the lift rod is the rotation connection end, and two ends of the lift rod are respectively disposed in a lift hanger of the first normally closed water outflow valve core or the second normally closed water outflow valve core.

In a preferred embodiment, when the toggle button moves from the middle position to the two sides, push force generated between the toggle button and the lift rod pushes one end of the lift rod to be lowered down and the other end to be lifted up.

In a preferred embodiment, a side of the lift rod facing the toggle button extends to define inclined surfaces from the middle position to the two sides.

In a preferred embodiment, when one end of the lift rod is lifted up, the one end of the lift rod interlocked to the lift hanger along an uplift direction.

In a preferred embodiment, the toggle button assembly further comprises a sliding block interlocked to the toggle button; the first normally closed water outflow valve core or the second normally closed valve core is disposed with a lift hanger; the sliding block partially interacts with the lift hanger in a moving direction of the sliding block.

In a preferred embodiment, when the sliding block interacts with a lift hanger, the sliding block is interlocked to the lift hanger along the uplift direction.

In a preferred embodiment, a part of the sliding block that interacts with the lift hanger is an inclined surface.

In a preferred embodiment, the first normally closed water outflow valve core or the second normally closed water outflow valve core respectively comprises a sealing member interlocked to the lift hanger; when the lift hanger is in an initial position, the sealing member seals a water outlet passage of the first normally closed water outflow valve core or the second normally closed water outflow valve core; when the lift hanger is lifted up, the sealing member moves upward to open the water outlet passage of the first normally closed water outflow valve core or the second normally closed water outflow valve core.

In a preferred embodiment, the first normally closed water outflow valve core or the second normally closed water outflow valve core respectively comprises a switch shaft connected between the sealing member and the lift hanger and a water-closing shut-off spring disposed in a valve body;

An upper end of the water shut-off spring is connected to an inner wall of the valve body and defines a fixed end, and a lower end abuts a protruding platform disposed with the switch shaft and defines a movable end; when the lift hanger is not lifted up, the water shut-off spring is in a compressed state.

In a preferred embodiment, a reset spring is disposed between the lift hanger and an inner wall of the first normally closed water outflow valve core or the second normally closed water outflow valve core; when the lift hanger moves upward, the reset spring is compressed to accumulate an elastic reset force.

Compared with the existing techniques, the technical solution has the following advantages.

The present disclosure provides a slide switch mechanical shower device. An interaction force is generated between the toggle button assembly and one or more normally closed outlet valves by sliding the toggle button leftward and rightward. This interaction force can drive the one or more normally closed outlet valves to be opened, so that a certain water outlet device is opened. This operation is very intuitive. The button assembly is only needed to move leftward and rightward to switch water outlet terminals. The switching process is very intuitive, and the required force for switching has no relation with water pressure. The user can maintain the same operation hand feeling under any water pressure. The comfort is better, and this shower device adopts a pure machine way to achieve a switching the water outlet terminals, and the cost is relatively low.

### BRIEF DESCRIPTION OF THE DRAWINGS

Fig. 1 illustrates a perspective view of a preferred embodiment 1 of the present disclosure;
Fig. 2 illustrates an exploded view of the preferred embodiment 1 of the present disclosure;
Figs. 3-5 illustrate schematic views of usage states of the preferred embodiment 1 of the present disclosure;
Figs. 6-8 illustrate schematic views of usage states of a preferred embodiment 2 of the present disclosure.

### DETAILED DESCRIPTION OF THE EMBODIMENTS

The present disclosure will be further described below in combination with the accompanying drawings and embodiments.

### Embodiment 1

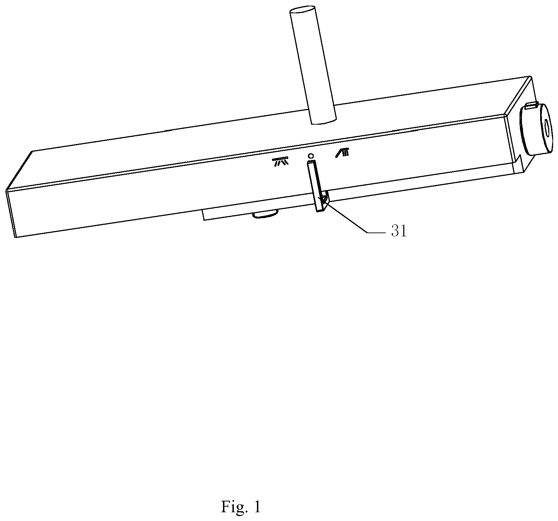

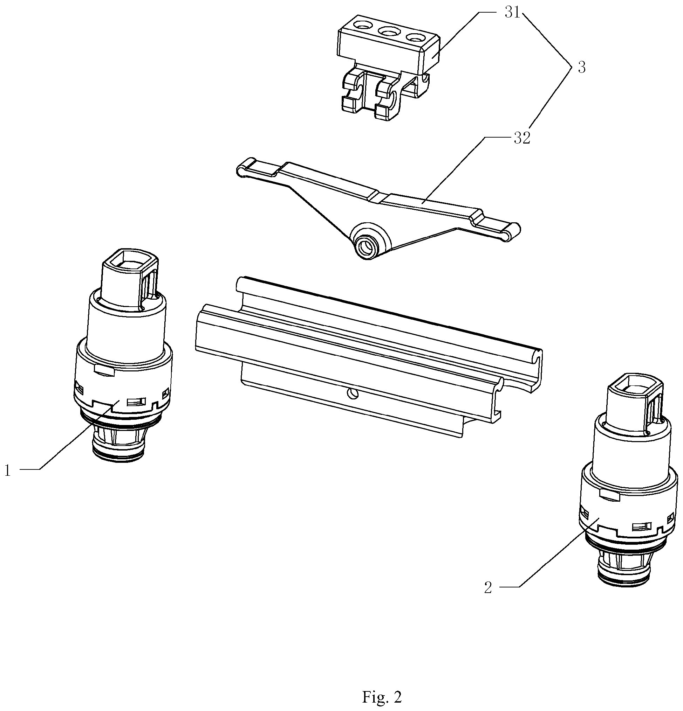

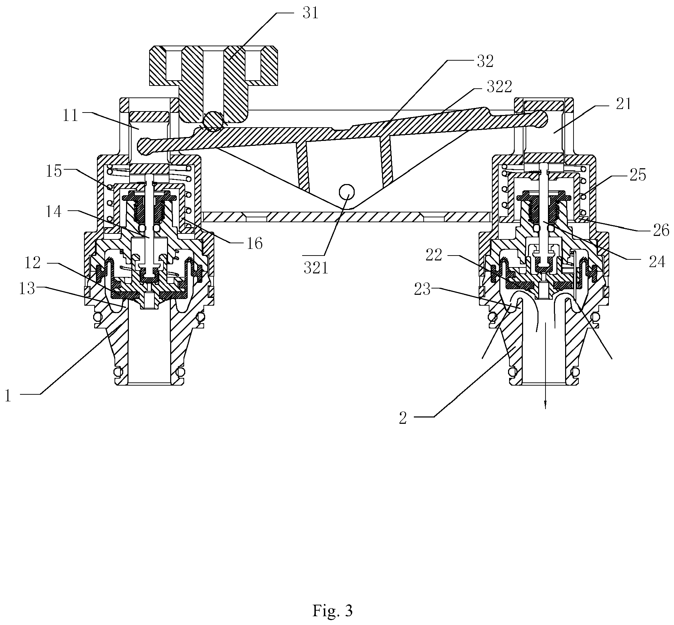

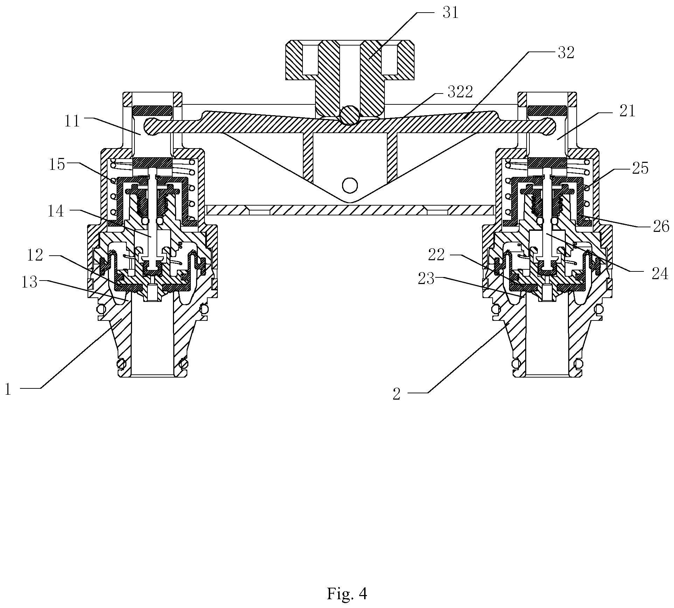

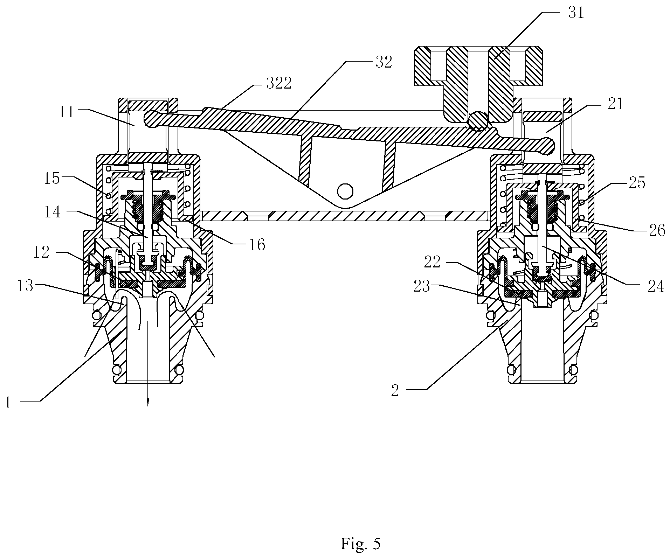

Referring to Figs. 1-5, a slide switch mechanical shower device comprises a first normally closed water outflow valve core 1, a second normally closed water outflow valve core 2 and a toggle button assembly 3; the toggle button assembly 3 comprises a toggle button 31 disposed on a surface of the shower device, and the toggle button 31 is configured to move along a length of the shower device.

When the toggle button 31 is in a middle position, no interaction force is generated between the toggle button assembly 3 and the first normally closed water outflow valve core 1 and the second normally closed water outflow valve core 2, and the first normally closed water outflow valve core 1 and the second normally closed water outflow valve core 2 are in normally closed states at the same time. When the toggle button 31 moves leftward or rightward relative to the middle position, the interaction force is generated between the toggle button assembly 3 and one of the first normally closed water outflow valve core 1 or the second normally closed water outflow valve cores 2 to drive the first normally closed water outflow valve core 1 or the second normally closed water outflow valve core 2 to be opened.

In the above-mentioned slide switch mechanical shower device, the interaction force is generated between the toggle button assembly 3 and normally closed water outflow valves by sliding the toggle button 31 leftward or rightward, the interaction force is configured to drive the normally closed water outflow valves to be opened, so that a certain water outlet device is opened. This operation mode is very intuitive, the toggle button assembly 3 is only needed to move leftward or rightward to switch water outlet terminals, and the switching process is very intuitive. Required force for switching has no relation with water pressure, the user can maintain the same operation hand feeling under any water pressure, and comfort is better. In addition, this kind of shower device adopts a pure machine method to switch the water outlet terminals, and the cost is relatively low.

This embodiment adopts the following structure, so that the interaction force is generated between the toggle button assembly 3 and one of the first normally closed water outflow valve core 1 or the second normally closed water outflow valve core 2 to drive the first normally closed water outflow valve core 1 or the second normally closed water outflow valve core 2 to be opened. The toggle button assembly 3 further comprises a lift rod 32; a middle position of the lift rod 32 defines a rotation connection end 321, and two ends of the lift rod 32 are respectively disposed in a lift hanger 11 (21) of the first normally closed water outflow valve core 1 or the second normally closed water outflow valve core 2. Therefore, the lift rod 32 defines a seesaw structure, as long as one end of the lift rod is subjected to downward force or upward force, the other end will be lifted up or lowered down accordingly.

The toggle button 31 and the lift rod 32 satisfy the following interlocked relationship for action: when the toggle button 31 moves from the middle position to two sides, push force generated between the toggle button 31 and the lift rod 32 pushes one end of the lift rod 32 to be lowered down and the other end to be lifted up.

A side of the pulling rod 32 facing the toggle button 31 extends to define inclined surfaces 322 from the middle position to the two sides, so that the interlocked relationship is achieved. Therefore, when a distance that the toggle button 31 moves to the two sides increases, uplift height of the lift rod 32 increases.

The lift rod 32 and the lift hanger 11 (21) satisfy the following interlocking relationship for the action: when the one end of the lift rod 32 is lifted up, the one end of the lift rod 32 and the lift hanger 11 (21) are interlocked in an uplift direction. Therefore, when the one end of the lift rod 32 is lifted up, a corresponding lifting hanger 11 (21) will also be lifted up.

In this embodiment, the first normally closed water outflow valve core 1 or the second normally closed water outflow valve core 2 respectively has a sealing member interlocked to the lift hanger 11 (21). Therefore, when the lift hanger 11 (21) is lifted up, a corresponding normally closed water outflow valve core is opened. When the lift hanger 11 (21) is in an initial position, the sealing member seals a water outflow passage of the first normally closed water outflow valve core 1 or the second normally closed water outflow valve core 2. When the lift hanger 11 (21) is lifted up, the sealing member moves upward to open the water outflow passage of the first normally closed water outflow valve core 1 or the second normally closed water outflow valve core 2.

The first normally closed water outflow valve core 1 or the second normally closed water outflow valve core 2 respectively has a switch shaft 14 (24) disposed between the sealing member and the lift hanger 11 (21), so that the sealing member is interlocked to the lift hanger 11 (21). When the lift hanger 11 (21) is lifted up, the switch shaft 14 (24) accordingly drive the sealing member to move upward. In addition, a valve body of the first normally closed water outflow valve core 1 or the second normally closed water outflow valve core 2 is disposed with a water shut-off spring 15 (25), when the lifting hanger 11 (21) is not lifted up, the first normally closed water outflow valve core 1 or the second normally closed water outflow valve core 2 is in a normally closed state. An upper end of the water shut-off spring 15 (25) is connected to an inner wall of the valve body and defines a fixed end, and a lower end abuts a protruding platform 16 (26) of the switch shaft 14 (24) and defines a movable end. When the lift hanger 11 (21) is not lifted up, the water shut-off spring 15 (25) is in a compressed state, and an elastic reset force generated by which downwardly presses the protruding platform 16 (26) to enable the switch shaft 14 (24) to drive the sealing member to seal the water outflow passage. When the lift hanger 11 (21) is lifted up, a lifting force of the lift hanger 11 (21) is greater than the elastic reset force of the water shut-off spring 15 (25), so that the first normally closed water outflow valve core 1 or the second normally closed water outflow valve core 2 is smoothly opened.

In detail, a lower end surface of the sealing member is disposed with a sealing ring 12 (22), a lower end surface of the normally closed water outflow valve core is a water outlet, and an outer periphery of an inner wall of the water outlet extends upward to define an enclosure 13 (23) disposed along a height direction of the normally closed water outflow valve core. When the lift hangers 11 (21) is in the initial positions, the sealing ring 12 (22) is matched with the enclosure 13 (23), so that the water outlet are closed.

In addition, a reset spring is connected between the lift hanger 11 (21) and an inner wall of the valve body of the first normally closed water outflow valve core 1 or the second normally closed water outflow valve core 2, when the lift rod 32 is lower down, the lift hanger 11 (21) automatically resets. When the lift hanger 11 (21) moves up, the reset spring is compressed to accumulate an elastic reset force.

Finally, the surface of the shower device is disposed with icons corresponding to the different water outlet terminals, for example, a hand-held shower and a top shower. When the toggle button 31 move to the two sides relative to the middle position, the toggle button 31 will point to one of the icons, the user can then find out which a current outlet terminal is. In this embodiment, the toggle button 31 moves towards one of the normally closed water outflow valves, the one of the normally closed water outflow valves remains to be closed. Therefore, the icons disposed on the surface of the shower device should be opposite to actual normally closed water outflow valves to achieve normal indications. For example, the first normally closed water outflow valve core 1 corresponds to the top shower, and the second normally closed water outflow valve core 2 corresponds to the hand-held shower. The first normally closed water outflow valve core 1 and the second normally closed water outflow valve core 2 are respectively disposed on a left side and a right side of the toggle button 31. Therefore, an icon disposed on the left side of the toggle button 31 should indicate the hand-held shower, and an icon disposed on the right side should indicate the top shower, so that it can correspond to the actual water outlet terminals.

### Embodiment 2

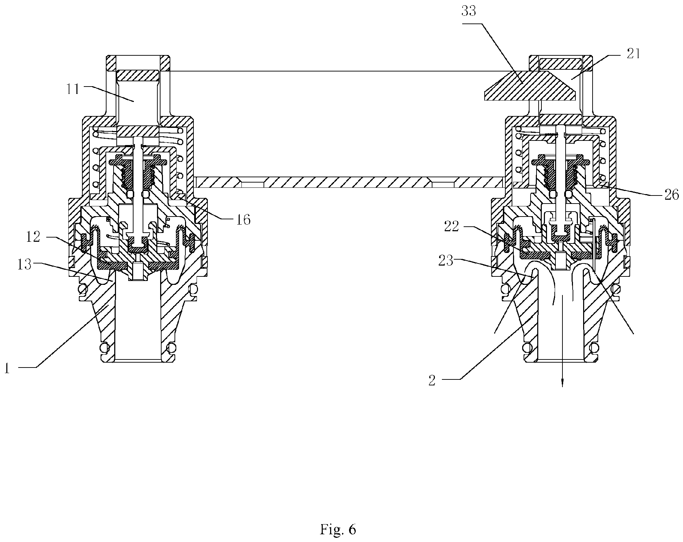

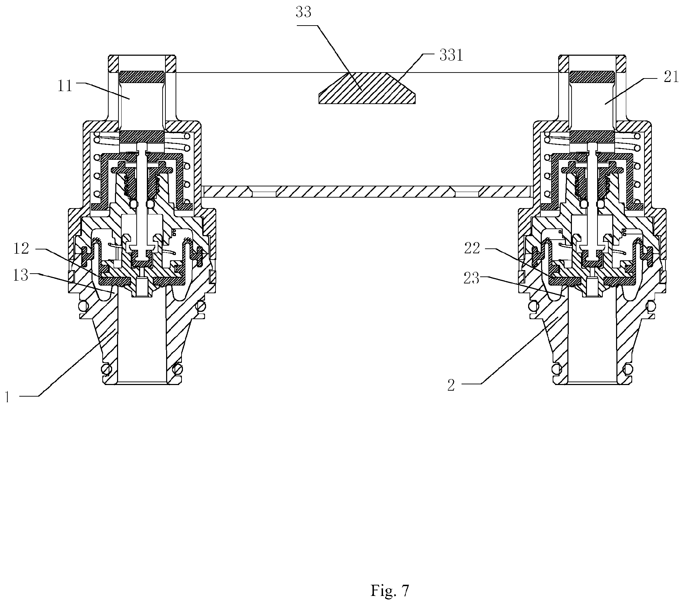

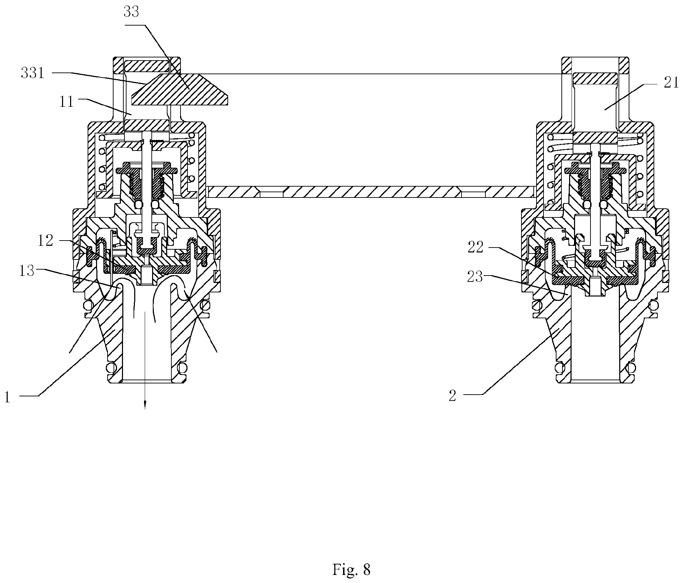

Referring to Figs. 6-8, this embodiment differs from Embodiment 1 in that the lift rod 32 is deleted from the toggle button assembly 3 and is replaced by a sliding block 33 interlocked to the toggle button 31.

This embodiment adopts the following structure, so that the toggle button assembly 3 and one of the first normally closed water outflow valve core 1 and (or) the second normally closed water outflow valve cores 2 generate the interaction force to drive the first normally closed water outflow valve core 1 or the second normally closed water outflow valve core 2 to be opened. The first normally closed water outflow valve core 1 or the second normally closed water outflow valve core 2 is disposed with a lift hanger 11 (21), and the sliding block 33 partially interacts with the lift hanger 11 (21) along a moving direction of the sliding block 33.

The sliding block 33 and the lift hanger 11 (21) satisfy the following interlinked relationship, when the sliding block 33 interacts with the lift hanger 11 (21), the sliding block 33 is interlocked to the lift hanger 11 (21) is lifted along an uplift direction.

A part of the sliding block 33 that interacts with the lift hanger 11 (21) is an inclined surface 331. In this way, when the interaction occurs, push force of the inclined surface 331 can push the lift hanger 11 (21) to move along the uplift direction.

In this embodiment, a structure of the lift hanger 11 (21) and the sealing member are the same as that of Embodiment 1 and will not be further described here.

Finally, the surface of the shower device is disposed with icons corresponding to different water outlet terminals, such as a hand-held shower and a top shower. When the toggle button 31 moves to the two sides relative to the middle position, the toggle button 31 will point to one of the icons, the user can then find out which the current outlet terminal is. In this embodiment, when the toggle button 31 moves to one of normally closed outlet valves, the one of the normally closed outlet valves is opened. Therefore, the icons disposed on the surface of the shower device should be the same as actual normally closed outlet valves to achieve normal indication. For example, the first normally closed water outflow valve core 1 corresponds to the top shower, and the second normally closed water outflow valve core 2 corresponds to the hand-held shower. The first normally closed water outflow valve core 1 and the second normally closed water outflow valve core 2 are respectively disposed on the left side and the right side of the toggle button 31. Therefore, an icon disposed on the left side of the toggle button 31 should indicate the top shower, an icon disposed on the right side should indicate the head-held shower, so that it can correspond to the actual water outlet terminals.

The invention may be summarized as follows: The present disclosure discloses a slide switch mechanical shower device, which comprises a first normally closed water outflow valve core, a second normally closed water outflow valve core and a toggle button assembly; the toggle button assembly comprises a toggle button disposed on a surface of the shower device, and the toggle button is configured to be toggled along a length of the shower device; when no interaction force is generated between the toggle button is in a middle position, the toggle button assembly and the first normally closed water outflow valve core and the second normally closed water outflow valve core, the first normally closed water outflow valve core and the second normally closed water outflow valve core are in normally closed states at the same time; when the toggle button moves leftward or rightward relative to the middle position, the interaction force generated between the toggle button assembly and one of the first normally closed water outflow valve core or the second normally closed water outflow valve core to drive the first normally closed water outflow valve core or the second normally closed water outflow valve core to be opened. Its switching operation is light and convenient, switching directivity and visual intuition is better, and a cost of a pure machine cost is relatively low.

The aforementioned embodiments are merely some embodiments of the present disclosure, and the scope of the disclosure of is not limited thereto. Thus, it is intended that the present disclosure cover any modifications and variations of the presently presented embodiments provided they are made without departing from the appended claims and the specification of the present disclosure.

## Claims

1. A slide switch mechanical shower device, comprising a first normally closed water outflow valve core, a second normally closed water outflow valve core and a toggle button assembly; the toggle button assembly comprises a toggle button disposed on a surface of the shower device, and the toggle button is configured to be toggled along a length of the shower device;
when the toggle button is in a middle position, no interaction force is generated between the toggle button assembly and the first normally closed water outflow valve core and the second normally closed water outflow valve core, the first normally closed water outflow valve core and the second normally closed water outflow valve core are in normally closed states at the same time; when the toggle button moves leftward or rightward relative to the middle position, the interaction force is generated between the toggle button assembly and one of the first normally closed water outflow valve core or the second normally closed water outflow valve core to drive the first normally closed water outflow valve core or the second normally closed water outflow valve core to be opened.

2. The slide switch mechanical shower device according to claim 1, **characterized in that**: the toggle button assembly further comprises a lift rod; a middle position of the lift rod is the rotation connection end, and two ends of the lift rod are respectively disposed in a lift hanger of the first normally closed water outflow valve core or the second normally closed water outflow valve core.

3. The slide switch mechanical shower device according to claim 2, **characterized in that**: when the toggle button moves from the middle position to the two sides, push force generated between the toggle button and the lift rod pushes one end of the lift rod to be lowered down and the other end to be lifted up.

4. The slide switch mechanical shower device according to claim 2 and/or 3, **characterized in that**: a side of the lift rod facing the toggle button extends to define inclined surfaces from the middle position to the two sides.

5. The slide switch mechanical shower device according to any one or more of claims 2 to 4, **characterized in that**: when one end of the lift rod is lifted up, the one end of the lift rod interlocked to the lift hanger along an uplift direction.

6. The slide switch mechanical shower device according to any one or more of claims 1 to 5, **characterized in that**: the toggle button assembly further comprises a sliding block interlocked to the toggle button; the first normally closed water outflow valve core or the second normally closed valve core is disposed with a lift hanger; the sliding block partially interacts with the lift hanger in a moving direction of the sliding block.

7. The slide switch mechanical shower device according to claim 6, **characterized in that**: when the sliding block interacts with a lift hanger, the sliding block is interlocked to the lift hanger along the uplift direction.

8. The slide switch mechanical shower device according to claim 6 and/or 7, **characterized in that**: a part of the sliding block that interacts with the lift hanger is an inclined surface.

9. The slide switch mechanical shower device according to any one or more of claims 2 to 8, **characterized in that**: the first normally closed water outflow valve core or the second normally closed water outflow valve core respectively comprises a sealing member interlocked to the lift hanger; when the lift hanger is in an initial position, the sealing member seals a water outlet passage of the first normally closed water outflow valve core or the second normally closed water outflow valve core; when the lift hanger is lifted up, the sealing member moves upward to open the water outlet passage of the first normally closed water outflow valve core or the second normally closed water outflow valve core.

10. The slide switch mechanical shower device according to claim 9, **characterized in that**: the first normally closed water outflow valve core or the second normally closed water outflow valve core respectively comprises a switch shaft connected between the sealing member and the lift hanger and a water-closing shut-off spring disposed in a valve body;
an upper end of the water shut-off spring is connected to an inner wall of the valve body and defines a fixed end, and a lower end abuts a protruding platform disposed with the switch shaft and defines a movable end; when the lift hanger is not lifted up, the water shut-off spring is in a compressed state.

11. The slide switch mechanical shower device according to any one or more of claims 2 to 10, **characterized in that**: a reset spring is disposed between the lift hanger and an inner wall of the first normally closed water outflow valve core or the second normally closed water outflow valve core; when the lift hanger moves upward, the reset spring is compressed to accumulate an elastic reset force.
